# EUROPEAN PATENT APPLICATION

(11) **EP 3 018 608 A1**
(43) Date of publication of application: **11.05.2016**
(21) Application number: 15192995.7
(22) Date of filing: 04.11.2015
(51) Int. Cl.: G06F 21/54, G06F 21/56

(54) **METHOD AND SYSTEM FOR DETECTING EXECUTION OF A MALICIOUS CODE IN A WEB-BASED OPERATING SYSTEM**

(30) Priority: 05.11.2014 US 201414533194
(71) Applicant: Samsung Electronics Co., Ltd., Gyeonggi-do 16677 (KR)
(72) Inventor: BESKROVNY, Evgeny, Gyeonggi-do 16677 (KR); HOCH, Yaacov, Gyeonggi-do 16677 (KR)
(74) Representative: Jenkins, Richard Gavin

(57) **Abstract**

The invention relates to a method and system for detecting the running of a malicious code which is injected into the execution context of a widget at a device having a web-based operating system. A method for detecting a malicious code at a device, the method comprising executing a software program, measuring required time to perform a source code from one hook of the source code to next hook of the source code in the software program, comparing a predefined range and the measured required time, determining whether the measured required time is out of the predefined range, and informing of an infection of the software program if the measured required time is out of the predefined range.

## Description

### Field of the Invention

The invention relates to the field of detecting exploitation of a system by the execution of malicious code. More specifically, the invention relates to a method and system for detecting the running of a malicious code which is injected into the execution context of a widget at a device having a web-based operating system.

### Background of the Invention

The web-based operating system is an emerging technology which becomes more and more popular these days. A prominent example is the Tizen OS developed jointly by Samsung Electronics and Intel Corporation, targeting consumer devices such as smartphones and SmartTVs.

A web-based operating system forms an execution environment, which is built around a web browser. This technology allows running within the device of widgets mainly written in HTML/JavaScript, the widgets are rendered by the runtime engine of the web browser.

The widget is the most typical software code for running within the web-based operating system. As the web-based OS is typically designed for the operation of mobile devices (such as smartphones, tablet, etc.) and smartTVs, the various widgets are typically supplied to the relevant device from an App-Store, which is most commonly owned by the manufacturer of the specific device. For example, widgets for the Samsung SmartTV are supplied by the Samsung owned App-Store.

As with any new platform, web-based operating systems have their own unique set of security problems and weaknesses, many of which are inherent to the web OS architecture. The most prominent security weaknesses evolve from the lack of: (a) proper access control; (b) distinct and enforceable user privileges; and (c) a clear separation between the presentation layer and the business logic.

Injection-type vulnerabilities, such as, XSS and HTML injections are the most critical vulnerabilities that affect web-based applications. These vulnerabilities allow execution of malicious code in the execution context of the vulnerable application (i.e., widget). The abovementioned type of security weakness amplifies the severity of malicious injection to any widget, an injection that may potentially result in a broad system exploit and a complete security compromise within the consumer device.

It is therefore an object of the present invention to provide a method and system for detecting and preventing the exploitation of injection-type vulnerabilities in a web-based Operating system environment.

It is another object of the present invention to provide a method and system for detecting and preventing such exploitation in a generic manner, with no requirement for *a*-*priori* knowledge of the malicious code nature, behavior, or its structure.

It is still another object of the present invention to provide such method and system in a simple and compact manner.

Other advantages of the present invention will become apparent as the description proceeds.

### Summary of the Invention

The invention relates to a method for detecting a malicious code which is injected into the command stream of a widget running by a web-based OS at a device, which comprises: (a) introducing by an App-Store hooks to within the command stream of the widget; (b) running at the App-Store the widget on an App-Store device, measuring respective time durations between various hooks, and recording said time durations within a metadata file; (c) associating said metadata file with said widget, and supplying said widget, including said associated metadata file to within a user device which is substantially identical to said App-Store device; (d) upon running said widget by a web-based OS at said user device, activating a monitoring module, determining by said module times durations between said introduced hooks, and comparing respectively said determined time durations with said measured time durations; and (e) issuing an alert upon detection of a variation above a predefined value between any of said determined durations and said measured durations respectively.

Preferably, said monitoring module is a part of said web-based OS.

Preferably, when an update is introduced at the APP-Store into said widget, a corresponding updated metadata file is also prepared, and sent to the device together with said update to the widget.

Preferably, when an update is introduced at the APP-Store introduced into said web-based OS that affect any of said measured time durations, said metadata file is also updated respectively, and said updated metadata file is sent to the device together with said updated web-based OS.

Preferably, said variation is a time value.

Preferably, said variation is a percentage value.

Preferably, the method is performed separately for each device model.

Preferably, all updates to said widget, said metadata file, and said web-based OS are performed by the App-Store. Preferably, the hooks are introduced every X lines of the widget code, where X is a constant integer.

Preferably, the hooks are introduced only in functions that do not involve with inputting from a user.

Preferably, the hooks are introduced randomly within the widget lines of code.

### Brief Description of the Drawings

In the drawings:
- Fig. 1 shows a typical prior art system for running a widget within a device;
- Fig. 2 shows a typical code streaming of a widget 12 within a device;
- Fig. 3 illustrates how according to the present invention a device can detect an exploit of the execution of widget by means of injecting a malicious code into the widget execution context;
- Fig. 4 describes a procedure according to the invention which is performed at the App-Store;
- Fig. 5 illustrates a procedure according to the invention which is performed within the device; and
- Fig. 6 illustrates a structure of a device according to an embodiment of the present disclosure.

### Detailed Description of Preferred Embodiments

The following description with reference to the accompanying drawings is provided to assist in a comprehensive understanding of exemplary embodiments of the disclosure as defined by the claims and their equivalents. It includes various specific details to assist in that understanding but these are to be regarded as merely exemplary. Accordingly, those of ordinary skilled in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of exemplary embodiments of the present disclosure is provided for illustration purpose only and not for the purpose of limiting the disclosure as defined by the appended claims and their equivalents.

Prior to a detailed description of the present disclosure, examples of interpretable meaning for some terms used herein will be presented. However, it should be noted that the terms are not limited to examples of the interpretation presented below.

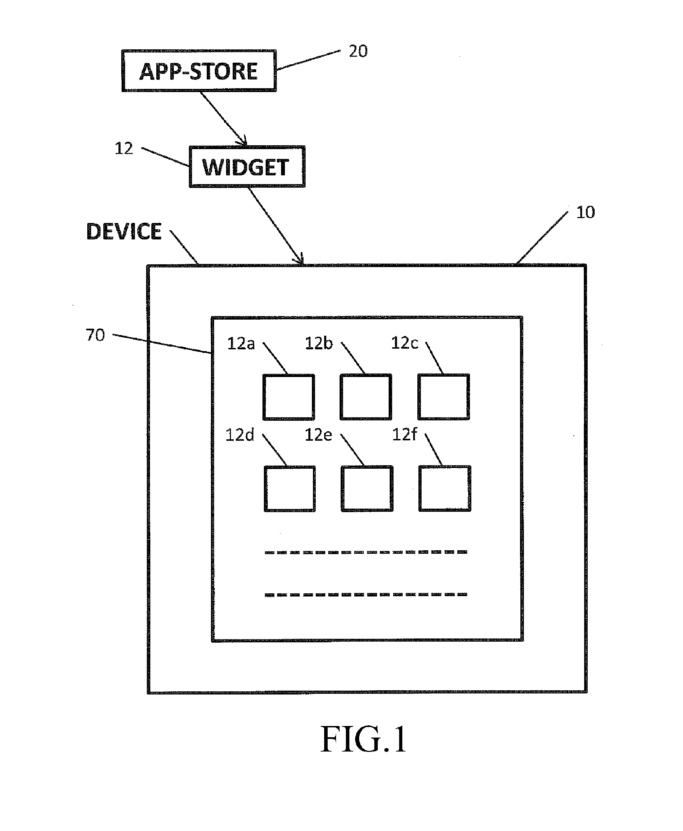

A typical prior art system for running a widget within a device is shown in Fig. 1. As noted above, a web-based OS 70 is a web-based operating system for use in mobile devices, SmartTVs, and the like devices. When used as the operating system of the device 10, it becomes the sole mechanism for initiating the running of widgets 12a-12f within the device. Moreover, the web-based operating system 70 is generally supplied by the manufacturer of the device, which is the sole source for applying updates and revisions to the operating system - all those come from an entity 20 which is typically referred to in the art as the "App-Store". The term App-Store was originally associated with a digital distribution platform for mobile applications on iOS, developed and maintained by Apple Inc. Later on, when many other manufacturers and distributors of mobile devices have adopted this type of platform, the meaning of the term was expanded such that it now refers to an application (or widget) distribution and update platform, which is maintained by any entity, typically by the manufacturer of the respective device 10. The present application refers to the term App-Store in said expanded meaning.

In any case, by its nature the App-store 20, even though receiving applications and widgets for distribution from many sources, is considered as a reliable entity whose task, among others, is to assure the authenticity, reliability, and security of the applications and widgets that are supplied to the end devices 10. Furthermore, to a large extent, each user of a device uses a single App-Store 20, which is typically owned and operated by the manufacturer of the respective device 10. As also noted, the App-Store 20 of the device manufacturer is also the supplier of the web-based OS 70, when used to operate the device. These facts are utilized by the security system of the present invention.

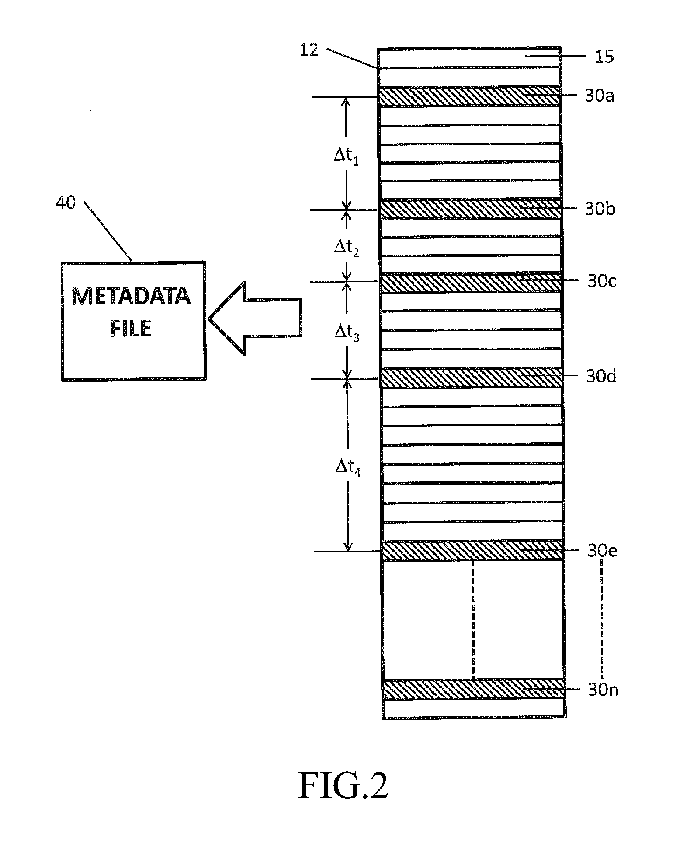

Fig. 2 shows a typical code streaming of a widget 12 within a device. As is well known, the code comprises plurality of commands 15, that are executed mostly one after the other, while also leaving to branches (sab-routines, etc.) from time to time. The inventors observed that while running by a web-based OS on a device of a specific model, there are commands within the widget execution context for which the duration between their respective executions is substantially constant. For example, when running on a specific device, the duration Δt₁ has a specific duration value which may change from time to time by, for example ± 10%. The other Δt values may also have a similar variation level. The variation level may depend on some other circumstances, such as on other widgets (or processes) that run simultaneously on the device, but typically the effects of these other simultaneously running widgets or processes on the specific times Δt respectively are relatively minor. These minor variations in the values of Δt evolve substantially from the type of tasks that are typically performed within the devices 10 that are operated by a web-based OS.

On the other hand, it has been found that when a malicious code is injected into the code context 12, the values of the duration Δtₛ are very substantially affected, and may enlarge, for example, by 100% or more. This is because at least some of the most dangerous malicious codes use slow operating resources (such as a network), or involve in transfer of relatively large amounts of data. The present invention utilizes said latter observations as well.

According to the present invention, several "hooks" 30a - 30n are spread within the code of the widget 12. The widget is then run by a web-based OS within a specific device 10, and the time durations Δtₛ between respective command executions are determined. This procedure of selecting the hooks locations and determination of the time durations Δt are typically performed by the APP-Store (or a similar reliable entity). The respective times durations Δtₛ are then recorded within a meta-data file 40, which is associated with the specific widget 12 and the specific device 10.

There are various manners for selecting the locations of the hooks. In one embodiment, the hooks are placed once every X lines of code (where X is a constant integer). In another embodiment, the hooks are positioned at predefined functions, for example, at each function that does not involve inputting from the user. In still another embodiment, the hooks may be distributed randomly within the widget code lines. Various other considerations may be applied for selecting where to introduce the hooks.

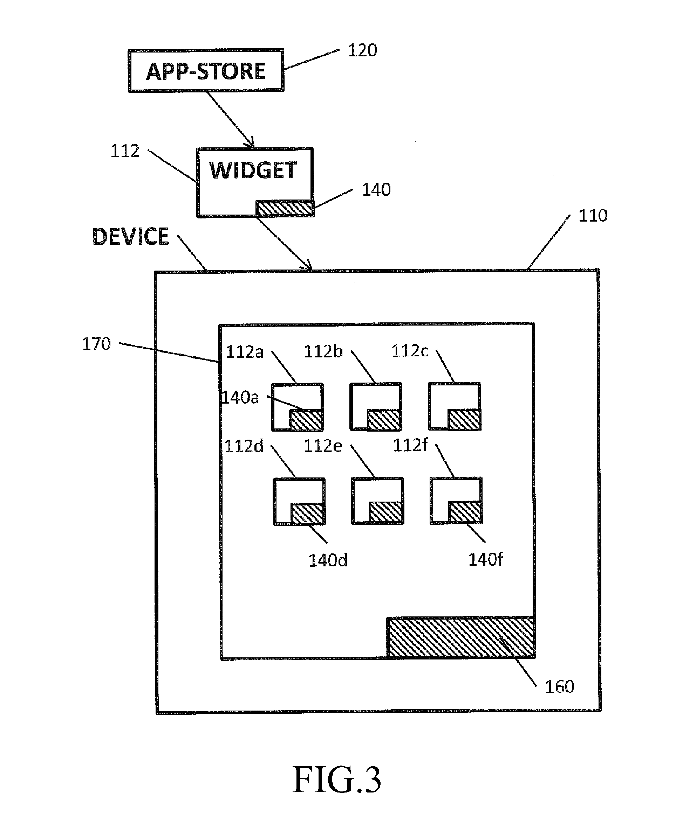

Fig. 3 illustrates how according to the present invention a device 110 can detect an exploit of the execution of widget 112 by means of injecting a malicious code into the widget execution context. According to the present invention, the widget 112 which is conveyed to the device 110 (for example, from the App-Store 120 or from the manufacturer of the device 110) is associated with a respective meta data file 140, which comprises the values of said previously determined Δtₛ. The web-based OS 170 which is supplied to the device 110 from the App-Store 120 (or from the manufacturer of the device) is also modified to include a monitoring module 160. During real time operation, when the web-based OS runs the widget 112 within the device 110, the monitoring module 160 monitors (i.e., measures) the times durations Δtₛ, and compares them with the expected respective time durations Δtₛ as included within the widget's respective metadata file 140. When the measured Δtₛ are found to be within a specific predefined variation value Δx, the widget is considered to be clean from malicious code and reliable. However, when a variation above said predefined variation value Δx is determined, the widget is suspected to include a malicious code, and an alert is issued. Following this alert, any suitable action well known in the art may be taken. The values Δx may be indicated by either time variation or percentage from the expected value Δt. Moreover, and in order to increase accuracy, preferably another metadata file is produced for each specific device model and widget, to take into account variations in execution speeds by various devices. The operation of the monitoring module 160 may be controlled to performe by a controller or a processor.

As shown, the invention provides a mechanism for determining a malicious code which may be injected to within a widget execution context. This injection may come from any unreliable source, for example, a hacker. As shown, the invention utilizes the fact that typically all the widgets are conveyed to within a device from a reliable App-Store, which is typically owned by the same entity as the provider or manufacturer of the respective device. The security mechanism of the invention is substantially independent from the specific content or nature of the malicious code, so it can even detect a new and unfamiliar malicious code.

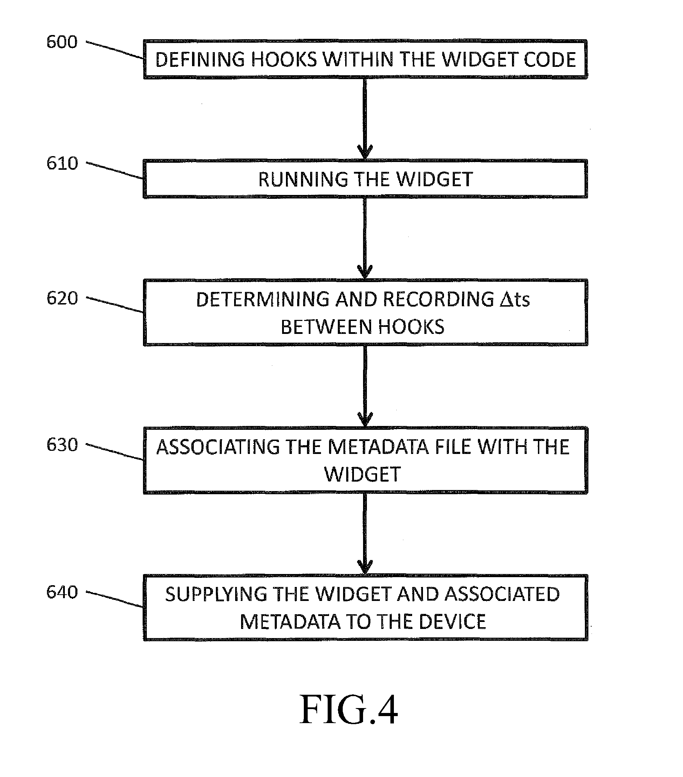

Fig. 4 describes the procedure which is performed at the App-Store. In the first step 600, hooks are predefined and introduced to within the widget code. In step 610, the App-Store runs the widget (including the hooks) on a specific device, by means of a web-based operating system. In step 620, the times Δts between respective hooks are determined, and recorded within a respective metadata file. In step 630, the metadata file is associated with the respective widget, and in step 640 the widget and its associated metadata file are supplied to within the respective device. Although not shown in Fig. 4, the App-Store or the manufacturer of the device also provides a modified web-based OS to the device which also includes the monitoring module 160 (shown in Fig. 3 - the term "modified" indicates herein that the web-based operating system at the device is in fact different from the standard OS by the inclusion of said monitoring module 160). From time to time, when updates are sent from the App-Store to a widget 112 or to the web-based OS 70, corresponding updates may also be performed to one or more of said metadata file 140, or the monitoring module 160. In one embodiment of the present disclosure, the App-Store runs the widget 112 many times dynamically and builds a directed graph of execution. The graph contains timing information. Every vertex will stand for a specific hook that was called. The edge will contain the transition time from node A to node B. The timing information which is associated with the edge may have one number. The timing information may have an array of numbers since during the single execution there can be a number of transitions between the hooks. The timing information may have an array of numbers where each number is related to a concrete execution, where other each number specifies the average or some other metric. The timing information may have specialized symbols. For example, if the time of transition varies a lot then we put a specialized symbol. The graph is included in a metadata along with the widget. During the download of the widget the graph is sent to a device. Every time the widget is updated an updated graph is sent along with.

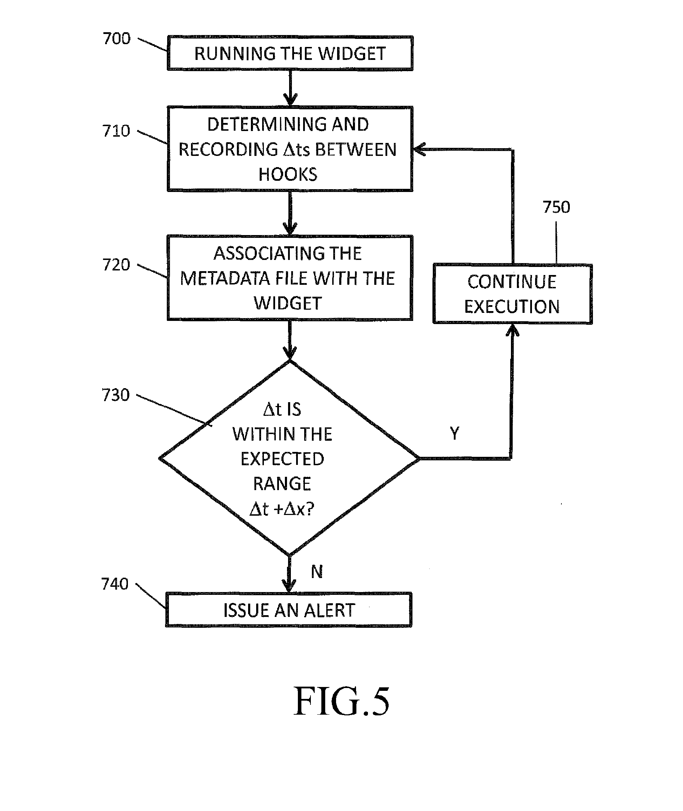

Fig. 5 illustrates the procedure which is performed within the device 10. In step 700, the web-based OS executes the widget. In step 710, the monitoring module 160 of the OS determines a Δt between two hooks. In step 720, the determined Δt is compared respectively with the expected Δt, as listed within the metadata file 140. If the result of said comparison shows in step 730 that the value of the determined Δt is within the expected range in the meta data file (i.e., within the respective Δt±Δx in the metadata file), the execution of the widget continues in step 750, and a similar verification is made with respect to additional hooks (steps 710 to 730, respectively). If, however, it is found that the determined Δt value is beyond the expected value (i.e., beyond the respective Δt±Δx at the metadata file), an alert is issued in step 740.

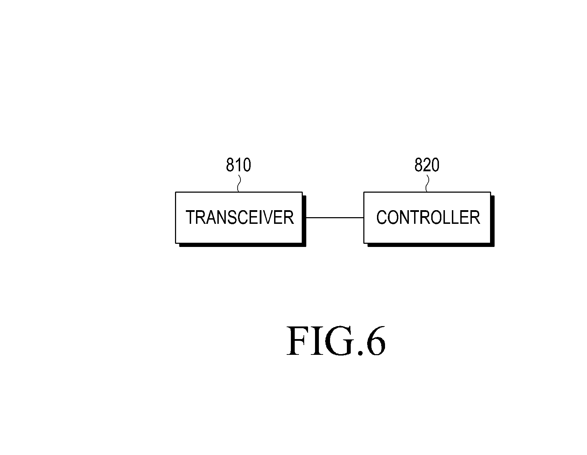

Fig. 6 illustrates a structure of a device according to an embodiment of the present disclosure.

The device may include a transceiver (810) and a controller (820). The transceiver (810) may transmit or receive at least one of a metafile, a software program. It may be construed that the controller (820) controls all of the operations described herein to be performed.

Although the transceiver (810) and the controller (820) are illustrated as separate components in FIG. 6, the transceiver (810) and the controller (820) may be implemented as one component.

While some embodiments of the invention have been described by way of illustration, it will be apparent that the invention can be carried into practice with many modifications, variations and adaptations, and with the use of numerous equivalents or alternative solutions that are within the scope of persons skilled in the art, without departing from the spirit of the invention or exceeding the scope of the claims.

## Claims

1. A method for detecting a malicious code at a device, the method comprising; executing a software program;
measuring required time to perform a source code from one hook of the source code to next hook of the source code in the software program;
comparing a predefined range and the measured required time;
determining whether the measured required time is out of the predefined range; and informing of an infection of the software program if the measured required time is out of the predefined range.

2. The method of claim 1, wherein the predefined range is a constant value or a percentage value of the required time.

3. The method of claim 1, wherein the predefined range is included in a metafile.

4. The method of claim 1, wherein the hook is identified by a number or a name.

5. The method of claim 1, further comprising;
receiving a metadata file including the required time according to various device model.

6. The method of claim 1, further comprising;
updating the required time.

7. The method of claim 1, wherein the software program is built under web-based operating system.

8. The method of claim 1, wherein the software program is a widget.

9. An apparatus for detecting a malicious code, the apparatus comprising;
a controller configured to execute a software program, measure required time to perform a source code from one hook of the source code to next hook of the source code in the software program, compare a predefined range and the measured required time, determine whether the measured required time is out of the predefined range, and inform of an infection of the software program if the measured required time is out of the predefined range.

10. The apparatus of claim 9, wherein the predefined range is integer value or percentage value of the required time of a metafile.

11. The apparatus of claim 9 adapted to operate according to one of claims 3 to 8.

12. A method for supporting a device detecting a malicious code, the method comprising;
inserting hook into source code of a software program;
executing the software program;
measuring required time to perform from one hook to next hook;
making a metafile including the required time; and
sending the metafile;

13. The method of claim 12. wherein a position of the hook is positioned at regular or irregular intervals.

14. An apparatus for supporting a device detecting a malicious code, the apparatus comprising;
a controller configured to insert hook into source code of a software program, execute the software program, measure required time to perform from one hook to next hook, make a metafile including the required time and send the metafile.

15. The apparatus of claim 14, wherein a position of the hook is positioned at regular or irregular intervals.
